(19) Europäisches Patentamt / European Patent Office / Office européen des brevets

(11) **EP 2 714 786 B1**

(12) **EUROPEAN PATENT SPECIFICATION**

(45) Date of publication and mention
of the grant of the patent:
**28.10.2015 Bulletin 2015/44**

(51) Int Cl.:
***C08J 9/14*** *(2006.01)*  ***C08L 61/06*** *(2006.01)*
***B32B 5/18*** *(2006.01)*

(21) Application number: **12726683.1**

(22) Date of filing: **25.05.2012**

(86) International application number:
**PCT/US2012/039741**

(87) International publication number:
**WO 2012/162678 (29.11.2012 Gazette 2012/48)**

(54) **PHENOLIC FOAMS WITH BLOWING AGENT 1, 1, 1, 4, 4, 4-HEXAFLUORO - 2 - BUTENE**

PHENOLSCHAUMSTOFFE MIT 1, 1, 1, 4, 4, 4-HEXAFLUOR-2 -BUTEN ALS TREIBMITTEL

MOUSSES PHÉNOLIQUES CONTENANT L'AGENT GONFLANT 1, 1, 1, 4, 4, 4-HEXAFLUORO - 2 - BUTÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2011   US 201161489807 P**
**25.05.2011   US 201161489854 P**
**25.05.2011   US 201161489847 P**

(43) Date of publication of application:
**09.04.2014   Bulletin 2014/15**

(73) Proprietor: **E. I. du Pont de Nemours and Company**
**Wilmington, DE 19898 (US)**

(72) Inventors:
• **COBB, Michael W.**
**Wilmington, Delaware 19808 (US)**

• **HARMER, Mark Andrew**
**Landenberg, Pennsylvania 19350 (US)**
• **KAPUR, Vivek**
**Kennett Square, Pennsylvania 19348 (US)**
• **LIAUW, Ann Y**
**Wilmington, Delaware 19803 (US)**
• **WILLIAMS, Sharlene Renee**
**Wilmington, Delaware 19803 (US)**

(74) Representative: **Matthews, Derek Peter**
**Dehns**
**St Bride's House**
**10 Salisbury Square**
**London EC4Y 8JD (GB)**

(56) References cited:
**US-A1- 2008 135 800     US-A1- 2009 099 274**

**Description**

FIELD OF THE INVENTION

This invention relates in general to phenolic foams and in particular to compositions and processes for producing closed-cell phenolic foams comprising FEA-1100.

BACKGROUND INFORMATION

Due to depleting world energy resources and global warming, there is a drive to improve energy efficiency of new and existing commercial and residential buildings. One of the strategies is to improve thermal insulation around the buildings. Currently, the building industry uses several different forms of insulation materials, for example, glass fibers and mineral fibers. However, glass and mineral fibers exhibit high thermal conductivity in the range of 0.03-0.04 W/m·K. In comparison, aerogels exhibit thermal conductivity in the range of 0.008-0.012 W/m·K, but aerogels are very fragile and lack the mechanical strength needed for thermal insulation for building applications.

Apart from fibrous insulation, certain types of polymeric foams are commonly used for insulation applications that exhibit thermal conductivity in between those of glass fibers and aerogel materials. Only foams that are blown from low thermal conductivity blowing agents and result in a predominantly closed-cell structures, with significant fraction of the blowing agent trapped within the closed-cells, can exhibit low thermal conductivity and high insulating values. Commercial foams with high insulation value are blown from low temperature boiling liquids such as chlorohdyrofluorocarbons (CHFCs) and chlorofluorocarbons (CFCs). However, these halogenated compounds have been implicated in the depletion of the Earth's ozone layer and are hence are being phased out by the Montreal Protocol. As a result, manufacturers of closed-cell foams are using certain hydrofluorocarbons such as HFC-245fa and HFC-365mfc. These alternate blowing agents do not pose any significant risk to the ozone layer because of their almost zero ozone depleting potential (ODP). Nevertheless, these HFC blowing agents are beginning to cause significant environmental concern because they exhibit high global warming potential (GWP) due to their contribution to the "green house" effect. To get around the global warming concerns, the foam manufactures are resorting to the use of hydrocarbons such as pentane, cyclopentane and isopentane. These hydrocarbons do indeed help to ameliorate the GWP concern. However, these hydrocarbons are flammable and because of their higher vapor phase thermal conductivity, offer lower insulation capacity than CFCs, CHFCs and HFCs. Thus, there is a strong need for the use of a blowing agent that offers low thermal conductivity to a closed-cell foam, is non-flammable, and does not have a deleterious effect on the environment.

U.S. Patent Application No. 2010,0280141 discloses the use of 1,1,1,4,4,4-hexafluoro-2-butene as a non flammable, low GWP, zero ODP, and low thermal conductivity blowing agent for polyurethanes (PU) and polyisocyanurate (PIR) foams. Both PU and PIR closed-cell foams have been shown to have excellent insulating properties. However, these materials are flammable and their use in the insulation of buildings, especially commercial high rise buildings is being limited because of local building codes.

Hence, there is a need for low thermal conductivity and fire resistant polymeric foams having a closed-cell structure with a trapped blowing agent with zero ODP and low GDP.

SUMMARY OF THE INVENTION

In an aspect of the invention, there is a foam comprising:

(a) a continuous polymeric phase defining a plurality of cells, wherein:

- the continuous polymeric phase comprises a phenol-formaldehyde resole is derived from a phenol and formaldehyde,
- the plurality of cells comprises a plurality of open-cells and a plurality of closed-cells with an open-cell content measured according to ASTM D6226-5, of less than 50%; and

(b) a discontinuous phase disposed in at least a portion of the plurality of closed-cells, the discontinuous phase comprising 1,1,1,4,4,4-hexafluoro-2-butene.

The foregoing general description and the following detailed description are exemplary and explanatory only and are not restrictive of the invention, as defined in the appended claims.

DETAILED DESCRIPTION

Disclosed is a foam comprising a continuous polymeric phase defining a plurality of cells, wherein the continuous polymeric phase comprises a phenol-formaldehyde resole derived from a phenol and formaldehyde, and wherein the plurality of cells comprises a plurality of open-cells and a plurality of closed-cells. The foam also comprises a discontinuous phase disposed in at least a portion of the plurality of closed-cells, the discontinuous phase comprising 1,1,1,4,4,4-hexafluoro-2-butene.

As used herein, the term "open-cell" refers to individual cells that are ruptured or open or interconnected producing a porous "sponge" foam, where the gas phase can move around from cell to cell. As used herein, the term "closed-cell" refers to individual cells that are discrete, i.e. each closed-cell is enclosed by polymeric sidewalls that minimize the flow of a gas phase from cell to cell. It should be noted that the gas phase may be dissolved in the polymer phase besides being trapped inside the closed-cell. Furthermore, the gas composition of the closed-cell foam at the moment of manufacture does not necessarily correspond to the equilibrium gas composition after aging or sustained use. Thus, the gas in a closed-cell foam frequently exhibits compositional changes as the foam ages leading to such known phenomenon as increase in thermal conductivity or loss of insulation value.

In one embodiment, the foam has an open-cell content of less than 50% or less than 40%, or less than 30%, as measured according to ASTM D6226-5. In another embodiment, the foam has an open-cell content of less than 20% or less than 10%, as measured according to ASTM D6226-5.

In an embodiment, the continuous polymeric phase of the foam comprises a phenol-formaldehyde resole derived from a phenol and formaldehyde present as reactants in a weight ratio in the range of 1:0.3 to 1:3.5 or 1:0.7 to 1:1.6.

The phenol used in the phenol-formaldehyde resole may be phenol or a substituted phenol. As used herein, the term "substituted phenol" refers to a molecule containing a phenolic reactive site and can contain another substituent group or moiety. Exemplary phenols include, but are not limited to, ethyl phenol, p-tertbutyl phenol; ortho, meta, and para cresol; resorcinol; catechol; xylenol; and the like.

In an embodiment, the phenol-formaldehyde resole is derived from a phenol, formaldehyde, and a reactant comprising water, methanol, ethylene glycol, polyol, propane diol, furfural, furfuryl alcohol, urea, resorcinol, or mixtures thereof. The reactant may be present in an amount in the range of 0.1-10% or 0.5-5% by weight based on the total weight of the phenol-formaldehyde resole.

In another embodiment, the phenol-formaldehyde resole is derived from a phenol, formaldehyde, and urea, and wherein the phenol and urea are present in a weight ratio of 1:0.005 to 1:0.05 or 1:0.01 to 1:0.05.

As used herein, the term "blowing agent" is used interchangeably with the term "foam expansion agent". In general, the blowing agent must be volatile and inert, and can be inorganic or organic. In an embodiment, the foam comprises 1,1,1,4,4,4-hexafluoro-2-butene available as FEA-1100 from E. I. du Pont de Nemours and Company (Wilmington, DE). In another embodiment, the foam comprises 1,1,1,4,4,4-hexafluoro-2-butene and at least one of carbon dioxide; hydrocarbons such as pentane, isopentane, cyclopentane petroleum ether, and ether; hydrochlorofluorocarbons such as 1,1-dichloro-1-fluoroethane (HCFC-141b); 2,2-dichloro-1,1,1-trifluoroethane (HCFC-123); 1-chloro-1,1-difluoroethane (HCFC-142b); 1,1,1,2-tetrafluoroethane (HCFC-134a); 1,1,1,3,3-pentafluoropropane (HFC-245$fa$) available from Honeywell (Morristown, NJ); 1,1,1,3,3-pentafluorobutane (HFC-365) available as Solkane® 365mfc from Solvay Chemicals (Bruxelles, Belgium); incompletely halogenated hydrocarbons such as 2-chloropropane; fluorocarbons such as dichlorodifluoromethane, 1,2-dichloro-1,1,2,2-tetrafluoroethane (CFC-114), trichlorotrifluoroethane (CFC-113), trichloromonofluoromethane (CFC-11), or mixtures thereof.

As used herein, the ozone depletion potential (ODP) of a chemical compound is the relative amount of degradation to the ozone layer it can cause, with trichlorofluoromethane (CFC-11) being fixed at an ODP of 1.0. As used herein, the global-warming potential (GWP) used herein is a relative measure of how much heat a greenhouse gas traps in the atmosphere. It compares the amount of heat trapped by a certain mass of the gas in question to the amount heat trapped by a similar mass of carbon dioxide, which is fixed at 1 for all time horizons (20 years, 100 years, and 500 years). For example, CFC-11 has GWP (100 years) of 4750. Hence, from the global warming perspective, a blowing agent should have zero ODP and as low GWP as possible.

In some embodiments, at least one of the blowing agents has an ozone depletion potential (ODP) of less than 2, or less than 1 or 0. In other embodiments, at least one of the blowing agents has a global warming potential (GWP) of less than 5000, or less than 1000, or less than 500. An exemplary blowing agent with zero ODP and a low GWP is 1,1,1,4,4,4-hexafluoro-2-butene (ODP=0 and GWP = 5).

In one embodiment, the foam has a density in the range of 10-500 kg/m$^3$, or 20-100 kg/m$^3$, or 20-80 kg/m$^3$.

In another embodiment, the foam has a thermal conductivity in the range of 0.015-0.035 W/m·K, or 0.015-0.03 W/m·K. The overall conductivity of the foam is strongly determined by the thermal conductivity of the gas phase or the discontinuous phase and the open-cell content of the foam. This is because the gas phase or the discontinuous phase disposed in at least a portion of the plurality of the closed-cells in a low-density foam (having a density in the range of 20-80 kg/m$^3$), usually makes up about 95% of the total foam volume. Hence, only those foams that are blown from low thermal conductivity blowing agents and result in closed-cell structures, with significant fraction of the blowing agent trapped within the closed-cells, can exhibit thermal conductivity lower than that of air. For example, if the open-cell content of a low density foam is more than 90%, then the foam will constitute mostly air, which exhibits a thermal conductivity in the range of 0.025-0.026 W/m·K at room temperature. Thus, a predominantly open-cell foam (with an open-cell content of more than 90%) will exhibit a thermal conductivity that is greater than 0.025 W/m·K. Similarly, a predominantly closed-cell foam (with closed-cell content of more than 90%) will have a thermal conductivity determined by the gas phase thermal conductivity of the blowing agent. For foams with an intermediate level (20-80 %) of open cell and/or closed-cell content, the thermal conductivity of the foam will be determined by the volume fraction and the thermal conductivity of the blowing agent.

For several different applications where thermal insulation is required, it is desirable that the insulation material exhibit low flammability. Flammability of a material may be evaluated by several different methods known to those skilled in the art. One method is to measure the Limiting Oxygen Index (LOI), which represents the concentration of oxygen required to sustain a flame during the burning of a material (ASTM 2863). The higher the LOI of a material the lower is its flammability. Thus it is desirable that insulating foams exhibit as high a LOI as possible. In an embodiment, the disclosed foam has a limiting oxygen index (LOI) of at least 23, or at least 25, or at least 30.

In addition to the closed-cell content, the size of the cells in a foam can also affect the resulting thermal conductivity. In addition to thermal properties, the cell size of the foam can also affect other properties of the foam, such as but not limited to the mechanical properties. In general, it is desirable that the cells of the foam be small and uniform. However, the size of the cells cannot be reduced indefinitely because for a given density foam if the cell size becomes too small the thickness of the cell walls can become exceedingly thin and hence can become weak and rupture during the blowing process or during use. Hence, there is an optimum size for the cells depending on the density of the foam and its use. In one embodiment, a cell, either an open-cell or a closed-cell, has an average size of less than 500 microns. In another embodiment, the cell has an average size of less than 300 microns and in yet another embodiment the cell has an average size of less than 200 microns. Cell size may be measured by different methods known to those skilled in the art of evaluating porous materials. In one method, thin sections of the foam can be cut and subjected to optical or electron microscopic measurement, such as using a Hitachi S2100 Scanning Electron Microscope available from Hitachi instruments (Schaumburg, Ill).

In an embodiment, the continuous polymer phase further comprises one or more surfactants, with at least one of ionic or non-ionic surfactants, including polymeric surfactants. A class of suitable surfactants includes siloxane-oxyalkylene copolymers such as those containing Si-O-C as well as Si-C linkages. The siloxane-oxyalkylene copolymers can be block copolymers or random copolymers. Typical siloxane-oxyalkylene copolymers contain a siloxane moiety composed of recurring dimethylsiloxy units endblocked with mononethylsiloxy and/or trimethylsiloxy units and at least one polyoxyalkylene chain composed of oxyethylene and/or oxypropylene units capped with an organic group such as an ethyl group. Suitable siloxane-oxyalkylene copolymeric surfactants include, but are not limited to, polyether-modified polysiloxanes, available as Tegostab B8406 from Evonik Goldschmidt Corporation (Hopewell, VA); (polyalkyleneoxide modified heptamethyltrisiloxane available as Silwet L-77 from OSi Specialties (Danbury CT).

Another class of suitable surfactants includes silicone surfactants such as, L-7003, L-5350, L-5420, and L-5340 silicone surfactants, all available from Union Carbide Corporation, and SF™1188 silicone surfactant available from GE Bayer Silicones.

Another class of suitable surfactants includes non-ionic organic surfactants such as the condensation products of alkylene oxides such as ethylene oxide, propylene oxide or mixtures thereof, and alkylphenols such as nonylphenol, dodecylphenol, and the like. Suitable non-ionic organic surfactants include, but are not limited to, Pluronic® non-ionic surfactants available from BASF Corp., (Florham Park, NJ); Tergitol™; Brij® 98, Brij® 30, and Triton X 100, all available from Aldrich Chemical Company; and Merpol®LF available from E. I. du Pont de Nemours and Company (Wilmington DE).. Suitable ionic surfactant includes, but is not limited to sodium dodecylsulfonate (SDS).

In other embodiment, the continuous polymer phase further comprises one or more acid catalysts. Suitable acid catalysts include, but are not limited to, benzenesulfonic acid, para-toluenesulfonic acid, xylenesulfonic acid, naphthalenesulfonic acid, ethylbenzenesulfonic acid, phenolsulfonic acid, sulfuric acid, phosphoric acid, boric acid, hydrochloric acid or mixtures thereof.

In another embodiment, the continuous polymer phase further comprises one or more additives. Suitable additives include, but are not limited to, cellulose fiber, bacterial cellulose, sisal fiber, clays, Kaolin-type clay, mica, vermiculite, sepiolite, hydrotalcite and other inorganic platelet materials, glass fibers, polymeric fibers, alumina fibers, aluminosilicate fibers, carbon fibers, carbon nanofibers, poly-1,3-glucan, lyocel fibers, chitosan, boehmite (AlO.OH), zirconium oxide, or mixtures thereof. The additive can also be a plasticizer comprising a polyester polyol, formed by the reaction of a polybasic carboxylic acid with a polyhydridic alcohol selected from a dihydridic to a pentahydridic. Examples of the acid include but are not limited to adipic acid, sebacic acid, naphthalene-2,6-dicarboxylic acid, cyclohexane-1,3-dicarboxylic acid, phthalic acid. Examples of the polyhydric alcohol include but are not limited to ethylene glycol, propylene diol, propylene glycol, 1,6-hexane diol, 1,4butane diol and 1,5-pentane diol. In an embodiment, the plasticizer is polyester polyol. The average molecular weight is in the range of 100-50,000 g/mol, or 200-40,000 g/mol, or 200-1000 g/mol.

In one embodiment, the phenol-formaldehyde foam is disposed between two similar or dissimilar non-foam materials, also called facers to form a sandwich panel structure. Any suitable material can be used for the facers. In one embodiment, the facers may be formed from a metal such as, but not limited to aluminum and stainless steel. In another embodiment, the facers may be formed from plywood, cardboard, composite board, oriented strand board, gypsum board, fiber glass board, and other building materials known to those skilled in the art. In another embodiment, the facers may be formed from nonwoven materials such as, Tyvek® and Typar® available from E. I. DuPont de Nemours & Company or from woven materials such as canvas and other fabrics.

The disclosed phenolic foams are low density rigid foams, having low thermal conductivity and low flammability. The disclosed phenolic foams could be used for a variety of applications, including, but not limited to, thermal insulation of building envelopes and household and industrial appliances. Furthermore, the disclosed foams can also be used in combination with other materials such as silica aerogels as a support for the fragile aerogel, and potentially as a catalyst support.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

As used herein, the phrase "one or more" is intended to cover a non-exclusive inclusion. For example, one or more of A, B, and C implies any one of the following: A alone, B alone, C alone, a combination of A and B, a combination of B and C, a combination of A and C, or a combination of A, B, and C.

Also, use of "a" or "an" are employed to describe elements and described herein. This is done merely for convenience and to give a general sense of the scope of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the disclosed compositions, suitable methods and materials are described below. In case of conflict, the present specification, including definitions, will control. In addition, the materials, methods, and examples are illustrative only and not intended to be limiting.

In the foregoing specification, the concepts have been disclosed with reference to specific embodiments. However, one of ordinary skill in the art appreciates that various modifications and changes can be made without departing from the scope of the invention as set forth in the claims below.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all embodiments.

It is to be appreciated that certain features are, for clarity, described herein in the context of separate embodiments, may also be provided in combination in a single embodiment. Conversely, various features that are, for brevity, described in the context of a single embodiment, may also be provided separately or in any subcombination. Further, reference to values stated in ranges include each and every value within that range.

The concepts disclosed herein will be further described in the following examples, which do not limit the scope of the invention described in the claims.

The examples cited here relate phenolic foams derived from a phenol and formaldehyde. The discussion below describes how a phenolic foam is formed.

## EXAMPLES

## TEST METHODS

### Density Measurement

Apparent density (p) of the foams was measured by a) cutting a foam into a regular shape such as a rectangular cube or cylinder, b) measuring the dimensions and the weight of the foam piece, c) evaluating the volume of the foam piece and then dividing the weight of the foam piece by the volume of the foam piece.

More specifically, three cylindrical pieces were cut from a test foam using a brass corer having an internal diameter of 1.651 mm (0.065") to calculate the average apparent density of the test foam. The diameter and the length of the cylindrical pieces were measured using Vernier calipers and then the volume ($V$) of the cylinder was calculated. The mass (m) of each cylindrical piece was measured and used to calculate the apparent density ($\rho_a$) of each foam piece.

$$\rho_a = \frac{m}{V}$$

**Open-Cell Content**

Open-cell content of foams was determined using ASTM standard D6226-5. All measurements were made at room temperature of 24 °C.

Pycnometer density ($\rho$) of each cylindrical piece was measured using a gas pycnometer, Model # Accupyc 1330 (Micromeritics Instrument Corporation, Georgia, U.S.A) at room temperature using nitrogen gas.

The AccuPyc works by measuring the amount of displaced gas. A cylindrical foam piece was placed in the pycnometer chamber and by measuring the pressures upon filling the chamber with a test gas and discharging it into a second empty chamber, volume ($V_s$) of the cylindrical foam piece that was not accessible to the test gas was calculated. This measurement was repeated five times for each foam cylindrical piece and the average value for $V_s$ was calculated.

The volume fraction of open-cells ($O_v$) in a foam sample was calculated by the following formula:

$$O_v = \frac{(V - V_s)}{V}$$

Assuming the specific gravity of the solid polymer to be 1 g/cm$^3$, the volume fraction of the cell walls ($CW_v$) was calculated from the following formula:

$$CW_v = \frac{m}{V}$$

Thus the volume fraction of closed-cells ($C_v$) was estimated by the following equation:

$$C_v = 1 - O_v - CW_v$$

**Thermal conductivity**

Hot Disk Model # PPS 2500S (Hot Disk AB, Gothenberg, Sweden) was used to measure thermal conductivities of the foams.

A foam whose thermal conductivity needed to be measured was cut into two rectangular or circular test pieces of same size. The lateral dimensions and the thickness of the foam pieces were required to be greater than four times the radius of the Hot Disk heater and sensor coil. The radius of the heater and sensor coil for all measurements was 6.4 mm and hence the lateral dimensions and the thickness of the foam pieces were greater than 26 mm.

Before the start of a measurement protocol, the heater and sensor coil was sandwiched between two test pieces of foam and the entire assembly was clamped together to ensure intimate contact between the surfaces of the foam pieces and the heater and sensor coil.

At the start of a test, a known current and voltage was applied to the heater and sensor coil. As the heater and sensor coil heated up due to the passage of current through the coil, the energy was dissipated to the surrounding test pieces of foam. At regular time intervals during the experiment, the resistance of the heater and sensor coil was also measured using a precise wheat stone bridge built into the Hot Disk apparatus. The resistance was used to estimate the instantaneous temperature of the coil. The temperature history of the heater and sensor coil was then used to calculate the thermal conductivity of the foam using mathematical analysis presented in detail by Yi He in Thermochimica Acta 436, pp 122-129, 2005.

The test pieces of foam were allowed to cool and the thermal conductivity measurement on the test pieces was repeated two more times. The thermal conductivity data was then used to calculate the average thermal conductivity of the foam.

### Limiting Oxygen Index (LOI)

The flammability of the foams was tested by the limiting oxygen index (LOI) method, according to ASTM D2863. LOI is the minimum concentration of oxygen, expressed as a volume percent, in a mixture of oxygen and nitrogen that will just support the flaming combustion of a material initially at room temperature under the conditions of ASTM D2863.

### Starting Materials

As used in the Examples below, phenol, 37% formaldehyde solution, Tween80 surfactant, and ethylene glycol were purchased from Sigma-Aldrich (St. Louis, MO). Surfactants, DABCO PM300 was purchased from Air Products and Chemicals, Inc. (Allentown, PA); and Tegostab B8406 (polyether-modified polysiloxane) was purchased from Evonik Goldschmidt Corporation (Hopewell, VA). Acid catalysts *p*-toluenesulfonic acid and xylenesulfonic acid were purchased from Sigma-Aldrich (St. Louis, MO). Blowing agent FEA-1100 (1,1,1,4,4,4-hexafluoro-2-butene) was purchased from E. I. du Pont de Nemours and Company (Wilmington, DE). Cerenol™ was available from DuPont Company (Wilmington, DE).

### Example 1: Preparation of Phenol-Formaldehyde Foam (PFF-1) with FEA-1100

#### *Step 1A: Preparation of Phenol-Formaldehyde Resole (PFR-1)*

A phenol-formaldehyde resole (molar ratio 1:2) was prepared by the reaction of phenol (94 g) with a 37% formaldehyde solution (162.3 g) in a 500 mL three-neck flask fitted with a reflux condenser, and stirred using an overhead stirrer. The pH was adjusted to 8-9 using potassium hydroxide (50 wt %, approximately 1.8 mL) at room temperature. The flask and contents were suspended in an oil bath and the temperature in the oil was raised at 1 °C/min until the temperature reached 85 °C. The resole was stirred for an additional 5 h at 85 °C. The flask and contents were then allowed to cool to room temperature. The pH of the solution was adjusted to pH 7 using acetic acid. The product was then placed on a rotary evaporator and heated at 80 °C under house vacuum for about 1.5 h yielding a viscous solution.

#### *Step 1B: Preparation of Phenol-Formaldehyde Foam (PFF-1) using FEA-1100*

The PFR-1 resole (10 g) was mixed using a spatula with DABCO PM300 surfactant (0.4 g), followed by the addition of FEA-1100 (1.5 g). The mixture was stirred with a spatula until smooth and uniform and a small amount of FEA-1100 was added to maintain the added weight of 1.5 g. Next, a 70/30 mixture of *p*-toluenesulfonic acid/xylenesulfonic acid (1.5 g) dissolved in a minimum of ethylene glycol was added to the mixture and the mixture was rapidly stirred for less than 1 min. A portion of the resulting mixture was placed into a 200 mL polyethylene bottle. The bottle and contents were placed in an oven at 80 °C for 5 min, whereupon the foam began to rise. After 5 min, the bottle was sealed with the polyethylene cap and placed back in the oven. After 40 min, the foam was removed from the bottle and the foam was placed back in the oven at 80 °C for 15-18 h. The density of the as-prepared foam, PFF-1 was 0.031 g/cc. The open-cell content of the foam, PFF-1 was 29%.

### Example 2: Preparation of Phenol-Formaldehyde Foam (PFF-2) with FEA-1100

#### *Step 2A: Preparation of Phenol-Formaldehyde Resole (PFR-2)*

A phenol-formaldehyde resole was prepared by the reaction of phenol (507.00 g) with 961.94 g of a 37% formaldehyde solution in a 2 L three-neck flask fitted with a reflux condenser and stirred using an overhead stirrer. The pH was adjusted to 8-9 using sodium hydroxide (50 wt %) at room temperature. The flask and contents were suspended in an oil bath and the reaction mixture was slowly heated (approximately 1.10 °C/min) to an internal temperature of 90 °C. The phenol-formaldehyde mixture was then maintained at 90 °C for an additional 180 min. The reaction solution was then cooled to room temperature. The pH of the solution was adjusted to pH 6.9 using hydrochloric acid (10 wt %). A portion of the product was then concentrated via rotary evaporation in an 80 °C bath to 57.20% of the original weight. The resulting resole was a viscous solution with a measured viscosity of 28 Pa·s at 40 °C. The $^{13}$C NMR of the resole PFR-2 revealed small peaks around 34.5-36.5 and 41-41.5 ppm characteristic of bridging methyl peaks.

#### *Step 2B: Preparation of Phenol-Formaldehyde Foam (PFF-2) using FEA-1100*

The PFR-2 resole (10 g) was mixed using a spatula with Tegostab B8408 surfactant (0.4 g), followed by the addition of FEA-1100 (1.50 g). The mixture was stirred with a spatula until smooth and uniform and a small amount of FEA-1100 was added to maintain the added weight of 1.50 g. Next, a 70/30 mixture of *p*-toluenesulfonic acid/xylenesulfonic acid (1.4 g) dissolved in a minimum of ethylene glycol was added to the mixture and the mixture was rapidly stirred for less than 1 min. A portion of the resulting mixture was placed into a 250 mL polyethylene bottle. The bottle and contents were placed in an oven at 80 °C for 5 min, whereupon the foam began to rise. After 5 min, the bottle was sealed with the polyethylene cap and placed back in oven. After 45 min, the cap was removed from the bottle along with its contents was placed back in the oven at 60 °C for 15-18 h. The density of the foam was found to be 0.043 g/cc. The open-cell content of the as-prepared foam, PFF-2 was 4.53%, and the measured thermal conductivity was 0.024 W/m·K. The limiting oxygen index (LOI) of the foam, PFF-2 was found to be 29.

### Examples 3-5: Preparation of Phenol-Formaldehyde Foam using FEA-1100 (PFF-3-PFF-5)

A portion of the PFR-2 resole was concentrated via rotary evaporation in an 80 °C bath to 52.60% of the original weight. The resulting resole PFR-3 resole was a very viscous solution with a measured viscosity of 50.8 Pa·s at 40 °C. The PFR·3 resole was used in Examples 3-5, where 4.2 wt % of an additive (water, ethylene glycol, or Cerenol™ (available from E. I. du Pont de Nemours and Company, Wilmington, DE) was mixed with the PFR-3 resole for less than 1 min, wherein the amount in wt % is based on the total weight of the PFR-3 resole. The PFR-3 resole with an additive (water, ethylene glycol, or Cerenol™) was used to form the foams PFF-3, PFF-4, and PFF-5 using the foaming procedure described for forming PFF-2 in step 2B of Example 2. Table 1 summarizes the additives and the amount of additives used in the formation the foams PFF-3, PFF-4, and PFF-5 and their properties,

**Table 1**

| Example | Additive | Add itive mass (g) | Foam | Density (g/cc) | Open-cell (%) | Thermal conductivity (W/mK) |
|---------|----------|--------------------|------|----------------|---------------|-----------------------------|
| 3 | Water | 0.440 | PFF-3 | 0.033 | 15.44 | 0.033 |
| 4 | Ethylene glycol | 0.440 | PFF-4 | 0.036 | 15.58 | 0.022 |
| 5 | Cerenol™ | 0.440 | PFF-5 | 0.043 | 32.72 | 0.034 |

### Example 6: Preparation of Phenol-Formaldehyde Foam (PFF-6) with FEA-1100

#### Step 6A: Preparation of Phenol-Formaldehyde Resole (PFR-6)

A phenol formaldehyde was prepared by reaction of 188 g of phenol with 367 g of a 37% formaldehyde solution in a 1 L three-neck flask fitted with a reflux condenser, and stirred using an overhead stirrer. The pH was adjusted to 8-9 using sodium hydroxide (50 wt %) at room temperature. The flask and contents were suspended in an oil bath and the temperature in the oil was raised at 1°C/min until the temperature reached 90 °C. The mixture was allowed to react for 1 h, after which time urea (5.64 g) was added. The phenol-formaldehyde mixture was stirred for an additional 30 min. The reaction was allowed to proceed for an additional 30 min. The flask and contents were then allowed to cool to room temperature. The pH of the solution was adjusted to pH 7 using hydrochloric acid (10 wt %). The product was then placed on a rotary evaporator and heated at 80 °C under house vacuum for 3 h, removing approximately 280 g of water. The resulting resole was a viscous solution with a measured viscosity of about 300 Pa·s. The $^{13}$C NMR of the resole PFR-6 revealed small peaks around 34.5-36.5 and 41-41.5 ppm, characteristic of bridging methylene peaks. Foams were made from this resole as described in Examples 6-9.

#### Step 6B: Preparation of Phenol-Formaldehyde Foam (PFF-6) using FEA-1100

The foaming procedure described in the step 2B of Example 2 was repeated using PFR-6, except that the bottle and contents were placed in an oven at 80 °C for 5 min, whereupon the foam began to rise. After 5 min, the bottle was sealed with a polyethylene cap and placed back in the oven. After 40 min, the foam was removed from the bottle and was placed back in the oven at 80 °C for 15-18 h. The properties of the as-prepared foam, PFF-6 are summarized in Table 2.

### Example 7: Preparation of Phenol-Formaldehyde Foam (PFF-7) with FEA-1100

The foaming procedure described in the step 2B of Example 2 was repeated using PRF-6, except that the mixture was left to rise in an oven at 80 °C in an open container for 45 min. The foam was then left to post-cure in an oven at 60 °C for 15-18 h. The properties of the as-prepared foam, PFF-7 are summarized in Table 2.

**Example 8: Preparation of Phenol-Formaldehyde Foam (PFF-8) with FEA-1100**

The foaming procedure described in the step 2B of Example 2 was repeated using PRF-6, except that the mixture was left to rise in an oven at 80 °C in an open container for 45 min. The foam was then left to post-cure in an oven at 60 °C for 15-18 h. The properties of the as-prepared foam, PFF-8 are summarized in Table 2.

**Example 9: Preparation of Phenol-Formaldehyde Foam (PFF-9) with FEA-1100**

The foaming procedure described in the step 2B of Example 2 was repeated using PRF-6, except that the bottle and contents were placed in an oven at 80 °C for 5 min, whereupon the foam began to rise. After 5 min, the bottle was sealed with the polyethylene cap. After 40 min the foam was removed from the bottle and the foam was placed back in the oven at 60 °C for 15-18 h. The properties of the as-prepared foam, PFF-9 are summarized in Table 2.

## Table 2

| Example | Surfactant | Surfactant mass (g) | Foam formed | Density (g/cc) | Open-cell (%) | Thermal conductivity (W/mK) |
|---|---|---|---|---|---|---|
| 6 | Tween80 | 0.4 | PFF-6 | 0.034 | 38.78 | 0.032 |
| 7 | PM300 | 0.4 | PFF-7 | 0.040 | 21.65 | 0.025 |
| 8 | DC193 | 0.4 | PFF-8 | 0.034 | 23.4 | 0.033 |
| 9 | PM300 | 0.4 | PFF-9 | 0.040 | 13.27 | -- |

These experiments demonstrate that phenolic foams can be produced with FEA-1100 as the blowing agent. Depending on the surfactant and foaming procedures, various results were obtained.

In Table 1, it is shown that the addition of Cerenol™ increased the density, open-cell content, and thermal conductivity of the foam. However, the use of water or ethylene glycol produced foams with similar densities and open-cell content. However, the thermal conductivity was higher for the foam that contained water as an additive. For the Examples 6-9, the resole contained urea, a compound known for reacting with free formaldehyde. The addition of the urea provided a large increase in the resole's viscosity. For the foams produced in the Examples 6-9 (Table 2), the Tween80 surfactant did not provide good closed-cell structure, compared to the other surfactants. PM300 seemed to provide the foam with the lowest open-cell content. Furthermore, when the foam containing PM300 was allowed to rise for 5 minutes with the lid on, a pressure was created, and this subtle change decreased the open-cell content of the foam. The foam with the lowest thermal conductivity and the highest closed-cell content was prepared using Tegostab surfactants.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims.

**Claims**

1. A foam comprising:

(a) a continuous polymeric phase defining a plurality of cells, wherein:

- the continuous polymeric phase comprises a phenol-formaldehyde resole derived from a phenol and formaldehyde, and

- the plurality of cells comprises a plurality of open-cells and a plurality of closed-cells with an open-cell content measured according to ASTM D6226-5, of less than 50%; and

(b) a discontinuous phase disposed in at least a portion of the plurality of closed-cells, the discontinuous phase comprising 1,1,1,4,4,4-hexafluoro-2-butene.

2.  The foam of claim 1, wherein the phenol-formaldehyde resole is derived from a phenol and formaldehyde present as reactants in a weight ratio in the range of 1:0.3 to 1:1.6.

3.  The foam of claim 1, wherein the open-cell content measured according to ASTM D6226-5, is less than 40%.

4.  The foam of claim 1, wherein the open-cell content measured according to ASTM D6226-5, is less than 30%.

5.  The foam of claim 1, wherein the foam has a density in the range of 10-500 kg/m$^3$.

6.  The foam of claim 1, wherein the foam has a density in the range of 20-100 kg/m$^3$.

7.  The foam of claim 1, wherein the foam has a thermal conductivity in the range of 0.015-0.035 W/m·K.

8.  The foam of claim 1, wherein the cell has an average size of less than 500 microns.

9.  The foam of claim 1, wherein at least 80% of the cells has an average size of less than 300 microns.

10. The foam of claim 1, wherein the phenol-formaldehyde resole is derived from a phenol, formaldehyde, and a reactant comprising water, methanol, ethylene glycol, polyol, propane diol, furfural, furfuryl alcohol, urea, resorcinol, or mixtures thereof.

11. The foam of claim 1, wherein the phenol-formaldehyde resole is derived from a phenol, formaldehyde, and urea, and wherein the phenol and urea are present in a weight ratio of 1:0.005 to 1:0.05.

12. The foam of claim 1, wherein the foam has a limiting oxygen index (LOI) of at least 30, measured according to ASTM-D2863.

13. An article comprising the foam of claim 1.

14. The article of claim 13 comprising a sandwich panel structure, wherein the sandwich panel structure comprises the foam disposed between two similar or dissimilar non-foam materials.


**Patentansprüche**

1.  Schaumstoff umfassend:

(a) eine kontinuierliche polymere Phase, die eine Mehrzahl von Zellen definiert, wobei

- die kontinuierliche polymere Phase ein Phenol-Formaldehyd-Resol umfasst, das von einem Phenol und Formaldehyd abgeleitet ist, und
- die Mehrzahl von Zellen eine Mehrzahl offener Zellen und eine Mehrzahl geschlossener Zellen mit einem Gehalt an offenen Zellen, ASTM D6226-5 entsprechend gemessen, von weniger als 50 % umfasst; und

(b) eine diskontinuierliche Phase, die in mindestens einem Teil der Mehrzahl von geschlossenen Zellen angeordnet ist, wobei die diskontinuierliche Phase 1,1,1,4,4,4-Hexafluor-2-buten umfasst.

2.  Schaumstoff nach Anspruch 1, wobei das Phenol-Formaldehyd-Resol von einem Phenol und Formaldehyd abgeleitet ist, die als Reaktanden in einem Gewichtsverhältnis im Bereich von 1:0,3 bis 1:1,6 vorliegen.

3.  Schaumstoff nach Anspruch 1, wobei der Gehalt an offenen Zellen, ASTM D6226-5 entsprechend gemessen, weniger als 40 % beträgt.

4. Schaumstoff nach Anspruch 1, wobei der Gehalt an offenen Zellen, ASTM D6226-5 entsprechend gemessen, weniger als 30 % beträgt.

5. Schaumstoff nach Anspruch 1, wobei der Schaumstoff eine Dichte im Bereich von 10 - 500 kg/m$^3$ aufweist.

6. Schaumstoff nach Anspruch 1, wobei der Schaumstoff eine Dichte im Bereich von 20 - 100 kg/m$^3$ aufweist.

7. Schaumstoff nach Anspruch 1, wobei der Schaumstoff eine Wärmeleitfähigkeit im Bereich von 0,015 bis 0,035 W/m·K aufweist.

8. Schaumstoff nach Anspruch 1, wobei die Zelle eine durchschnittliche Größe von weniger als 500 Mikron aufweist.

9. Schaumstoff nach Anspruch 1, wobei mindestens 80 % der Zellen eine durchschnittliche Größe von weniger als 300 Mikron aufweist.

10. Schaumstoff nach Anspruch 1, wobei das Phenol-Formaldehyd-Resol von einem Phenol, Formaldehyd und einer Reaktande abgeleitet ist umfassend Wasser, Methanol, Ethylenglycol, Polyol, Propandiol, Furfural, Furfurylalkohol, Harnstoff, Resorcin oder Mischungen davon.

11. Schaumstoff nach Anspruch 1, wobei das Phenol-Formaldehyd-Resol von einem Phenol, Formaldehyd und Harnstoff abgeleitet ist und wobei das Phenol und der Hartstoff in einem Gewichtsverhältnis von 1:0,005 bis 1:0,05 vorliegen.

12. Schaumstoff nach Anspruch 1, wobei der Schaumstoff einen beschränkenden Sauerstoffindex (LOI) von mindestens 30, ASTM-D2863 entsprechend gemessen, aufweist.

13. Artikel umfassend den Schaumstoff nach Anspruch 1.

14. Artikel nach Anspruch 13, umfassend eine Dreischichtentafelstruktur, wobei die Dreischichtentafelstruktur den zwischen zwei ähnlichen oder unähnlichen Nichtschaumstoffmaterialien eingebrachten Schaumstoff umfasst.


**Revendications**

1. Mousse comprenant:

    (a) une phase polymère continue définissant une pluralité d'alvéoles, où:

        la phase polymère continue comprend un phénol-formaldéhyde résole dérivé d'un phénol et d'un formaldéhyde, et
        la pluralité des alvéoles comprend une pluralité d'alvéoles ouvertes et une pluralité d'alvéoles fermées avec une teneur en alvéoles ouvertes mesurée selon la norme ASTM D6226-5, de moins de 50 %; et

    (b) une phase discontinue disposée dans au moins une partie de la pluralité des alvéoles fermées, la phase discontinue comprenant du 1,1,1,4,4,4-hexafluoro-2-butène.

2. Mousse selon la revendication 1, dans laquelle le phénol-formaldéhyde résole est dérivé d'un phénol et d'un formaldéhyde présents comme réactifs en un rapport en poids situé dans la plage de 1:0,3 à 1:1,6.

3. Mousse selon la revendication 1, dans laquelle la teneur en alvéoles ouvertes mesurée selon la norme ASTM D6226-5, est inférieure à 40 %.

4. Mousse selon la revendication 1, la teneur en alvéoles ouvertes mesurée selon la norme ASTM D6226-5, est inférieure à 30 %.

5. Mousse selon la revendication 1, dans laquelle la mousse a une densité située dans la plage de 10 à 500 kg/m$^3$.

**6.** Mousse selon la revendication 1, dans laquelle la mousse a une densité située dans la plage de 20 à 100 kg/m$^3$.

**7.** Mousse selon la revendication 1, dans laquelle la mousse a une conductivité thermique située dans la plage de 0,015 à 0,035 W/m•K.

**8.** Mousse selon la revendication 1, dans laquelle l'alvéole a une taille moyenne inférieure à 500 microns.

**9.** Mousse selon la revendication 1, dans laquelle au moins 80 % des alvéoles ont une taille moyenne inférieure à 300 microns.

**10.** Mousse selon la revendication 1, dans laquelle le phénol-formaldéhyde résole est dérivé d'un phénol, d'un formaldéhyde, et d'un réactif comprenant de l'eau, du méthanol, de l'éthylène glycol, du polyol, du propane diol, du furfural, de l'alcool de furfuryle, de l'urée, du résorcinol, ou de leurs mélanges.

**11.** Mousse selon la revendication 1, dans laquelle le phénol-formaldéhyde résole est dérivé d'un phénol, d'un formaldéhyde, et de l'urée, et dans laquelle le phénol et l'urée sont présents en un rapport en poids de 1:0,005 à 1:0,05.

**12.** Mousse selon la revendication 1, dans laquelle la mousse a un indice limite d'oxygène (IO(1)) d'au moins 30, mesuré selon la norme ASTM-D2863.

**13.** Article comprenant la mousse selon la revendication 1.

**14.** Article selon la revendication 13 comprenant une structure de panneaux en sandwich, la structure de panneaux en sandwich comprenant la mousse disposée entre deux matériaux semblables ou dissemblables non en mousse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100280141 A

**Non-patent literature cited in the description**

- **YI HE.** *Thermochimica Acta,* 2005, vol. 436, 122-129